# EUROPEAN PATENT APPLICATION

(11) **EP 3 035 568 A1**
(43) Date of publication of application: **22.06.2016**
(21) Application number: 14198213.2
(22) Date of filing: 16.12.2014
(51) Int. Cl.: H04H 60/31, H04H 60/41, H04H 60/66, H04L 29/06, H04N 21/2385

(54) **System and method for audio/video content distribution**

(71) Applicant: Advanced Digital Broadcast S.A., 1292 Geneva (CH)
(72) Inventor: Charydczak, Patryk, 65-119 Zielona Gora (PL)
(74) Representative: Blonski, Pawel

(57) **Abstract**

Method for audio/video content delivery comprising the steps of: transmitting N audio/video content channels over a broadcast medium; simultaneously transmitting M audio/video content items over a broadband medium; the method further comprising the steps of: defining a numerical condition for monitoring subscribers' requests for reception of the M audio/video content items; verifying whether the numerical condition is met for at least one of the M audio/video content items; in case the numerical condition is met, requesting ceasing of the transmission of the at least one of the M audio/video content items via the broadband channel; requesting transmission of the at least one of the M audio/video content items via the broadcast channel; notifying subscriber's receivers to switch from reception of the at least one of the M audio/video content items from the broadband channel to the broadcast channel.

## Description

The present invention relates to a system and method for audio/video content distribution. In particular the present invention relates to optimization of content delivery in terms of bandwidth, accessibility and scalability.

Prior art defines different audio/video content distribution methods. These include terrestrial, cable and satellite distribution channels as the typical television signal broadcasting methods. In addition, Internet television is becoming more popular as high-speed Internet connections are becoming widely accessible.

Hybrid set-top boxes are increasingly commonplace amongst pay-TV operators, as they look to meet the changing media consumption trends for more video content, advanced interactivity and internet applications, like social networking (source: Wikipedia).

Both traditional and Internet delivery methods have their pros and cons. In traditional broadcast technology, the content constantly flows downstream to each subscriber, and the customer switches the content at an STB. A switched IP network works differently. Content remains in the network, and only the content, selected by the customer, is sent into the customer's home. Typical broadcast usually has more coverage while Internet television is less constrained in terms of content and interactive, supplementary services. Such premium services include video on demand, interactive television content, supplementary data presentation to the audio/video content (e.g. statistical information, descriptive information, show-related products ordering etc.).

It would be advantageous to exploit advantages of both approaches depending on current customers base, current network setup and demand of services at a particular time instant.

The aim of the development of the present invention is an improved system and method for audio/video content distribution.

### SUMMARY AND OBJECTS OF THE PRESENT INVENTION

An object of the present invention is a method for audio/video content delivery comprising the steps of: transmitting N audio/video content channels over a broadcast medium; simultaneously transmitting M audio/video content items over a broadband medium; the method further comprising the steps of: defining a numerical condition for monitoring subscribers' requests for reception of the M audio/video content items; verifying whether the numerical condition is met for at least one of the M audio/video content items; in case the numerical condition is met, requesting ceasing of the transmission of the at least one of the M audio/video content items via the broadband channel; requesting transmission of the at least one of the M audio/video content items via the broadcast channel; notifying subscriber's receivers to switch from reception of the at least one of the M audio/video content items from the broadband channel to the broadcast channel.

Preferably, the step of requesting transmission of the transmission of the at least one of the M audio/video content items via the broadcast channel includes removal of at least one other channel from the broadcast transmission.

Preferably, the numerical condition, for monitoring subscribers' requests for reception of the M audio/video content items, is sessions count or a number of accesses to the content M audio/video items within a predefined time window.

Preferably, the method further comprises the steps of: requesting ceasing of the transmission of the at least one of the M audio/video content items via the broadband channel; requesting transmission of the at least one of the M audio/video content items via the broadcast channel; are executed, independently for each content item, when the at least one of the M audio/video content items, delivered via the broadband channel, has finished.

Preferably, the step of: requesting ceasing of the transmission of the at least one of the M audio/video content items via the broadband channel; is preceded by requesting the broadband transmission receivers to play back an advertisements block.

Preferably, the step of requesting transmission of the at least one of the M audio/video content items via the broadcast channel is executed prior to requesting ceasing of the transmission of the at least one of the M audio/video content items via the broadband channel.

Preferably, the method further comprises a step of receiving from subscriber's receivers information regarding currently accessed broadcast channel and the channel having the fewest accesses is the one to be removed.

Another object of the present invention is a method for audio/video content reception comprising the steps of: facilitating access to N audio/video content channels over a broadcast medium; simultaneously facilitating access to M audio/video content items over a broadband medium; playing back at least one of the M audio/video content items over a broadband medium; the method further comprising the steps of: receiving a request for ceasing of the reception of the at least one of the M audio/video content items via the broadband channel; receiving a request to start reception of the at least one of the M audio/video content items via the broadcast channel; playing back the at least one of the M audio/video content items over the broadcast channel.

Another object of the present invention is a computer program comprising program code means for performing all the steps of the computer-implemented method according to the present invention when said program is run on a computer. Another object of the present invention is a computer readable medium storing computer-executable instructions performing all the steps of the computer-implemented method according to the present invention when executed on a computer.

These and other objects of the invention presented herein, are accomplished by providing a system and method for audio/video content distribution. Further details and features of the present invention, its nature and various advantages will become more apparent from the following detailed description of the preferred embodiments shown in a drawing, in which:
Fig. 1A presents a diagram of the system comprising hybrid broadcast/iptv receivers;
Fig. 1B presents a diagram of the system according to the present invention; and
Fig. 2 presents a diagram of the method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

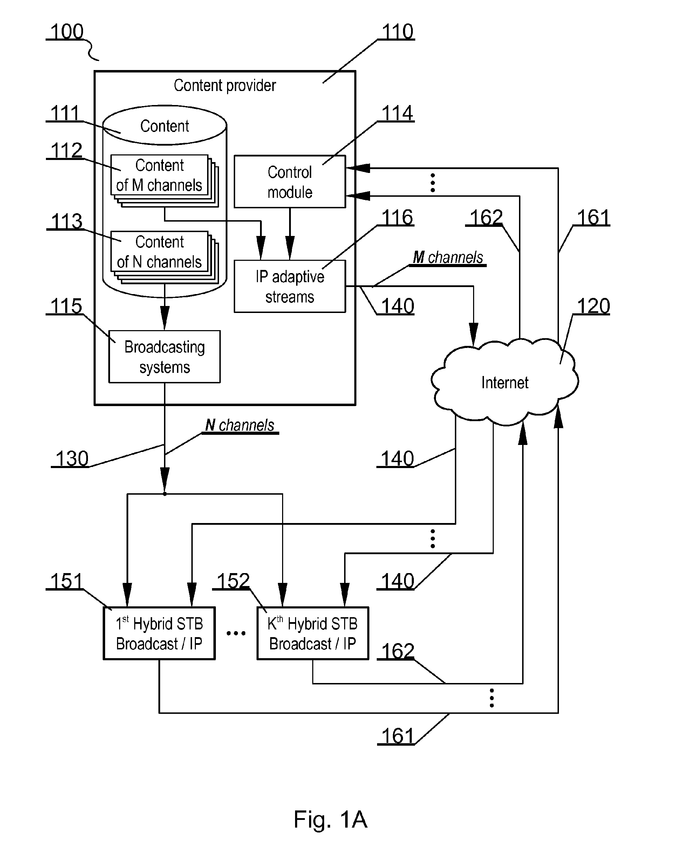

Fig. 1A presents a diagram of the system comprising hybrid broadcast/iptv receivers. The system 100 comprises a head-end 110 and at least one receiver 151, 152. The head-end is the broadcasting side of the system 100 and thus comprises modules responsible for content aggregation and transmission. Data aggregation may include encoding, transcoding, scrambling and similar techniques in audio/video data processing, which are not specifically mentioned herein for the sake of simplicity.

The aforementioned audio/video processing techniques are implemented by a broadcasting systems module 115 and an IP adaptive streams module 116. These modules process the audio/video content and are configured to transmit the generated data. The broadcasting systems module 115 uses the traditional terrestrial, cable or satellite broadcast while the IP adaptive streams module 116 adaptively transmits Internet data streams, individually to each subscriber 151, 152. The IP adaptive streams module 116 may adjust the bandwidth, assigned for each subscriber, depending on the load of the transmitting systems.

It is to be understood that computing devices, that are part of the head-end, may comprise suitable storage and operational memories that may store computer program or programs executed by the computing devices in order to execute steps of the method according to the present invention.

The content provider has access to a database of content 111 from which some content items are selected for broadcast 113 while some other content items 112 are selected for iptv delivery 140 over the Internet 120.

A control module 114 receives messages from the subscribers 151, 152 that identify content for iptv delivery (a so called return channel capability 161, 162). The control module 114 therefore interacts with the content database 111.

Each receiver 151, 152 is a hybrid system capable of receiving broadcast data as well as iptv data. A subscriber has a selection of N channels delivered via a traditional broadcast as well as M channels available from the Internet television system.

Typically, a user will request video-on-demand services over iptv but iptv content may be organized as typical broadcast channels comprising a sequence of events. Thus, when there is a significant number of simultaneous request for IPTV services, the IP adaptive streams module 116 may be forced to decrease content quality or in severe cases to refuse content delivery. Thus, iptv content delivery optimization is a need that has to be addressed.

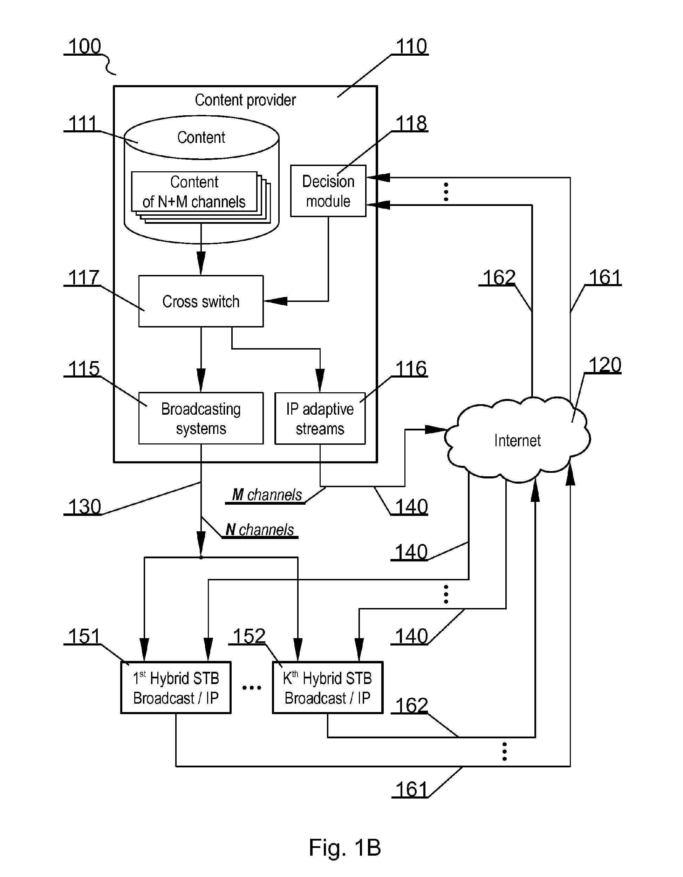

Fig. 1B presents a diagram of the system according to the present invention. The system is aimed at optimizing allocation of broadcast 130 and iptv bandwidth 140. The system of Fig. 1B is similar to the system of Fig. 1A with the exception of a decision module 118.

The decision module 118 analyzes the requests of subscribers' terminals 151, 152 for both broadcast and iptv (sometimes referred to as broadband) content. Based on the analysis of the requests, the module 118 recommends transmitting some of the content items as broadcast instead of broadband and vice versa by instructing the cross switch 117. For example when some broadcast channel is not watched by a given threshold value of subscribers, the broadcast channel may be removed from the broadcast offer and be made available via the iptv delivery channel. In a different scenario, when the number of subscribers accessing an iptv channel exceeds a predefined threshold, such iptv channel may be removed from the iptv transmission and be made available via the broadcast transmission medium. In one embodiment there is present a step of receiving from subscriber's receivers information regarding currently accessed broadcast channel and the channel having the fewest accesses is the one to be removed from the broadcast in order to free bandwidth for the newly added channel. The channel removed from broadcast may be made available via the broadband channel.

Thus, instead of decreasing quality of the iptv channel due to high number of simultaneous connections, the system will activate the broadcast channel for the same content. This in turn optimizes the bandwidth and increases quality of the audio/video content.

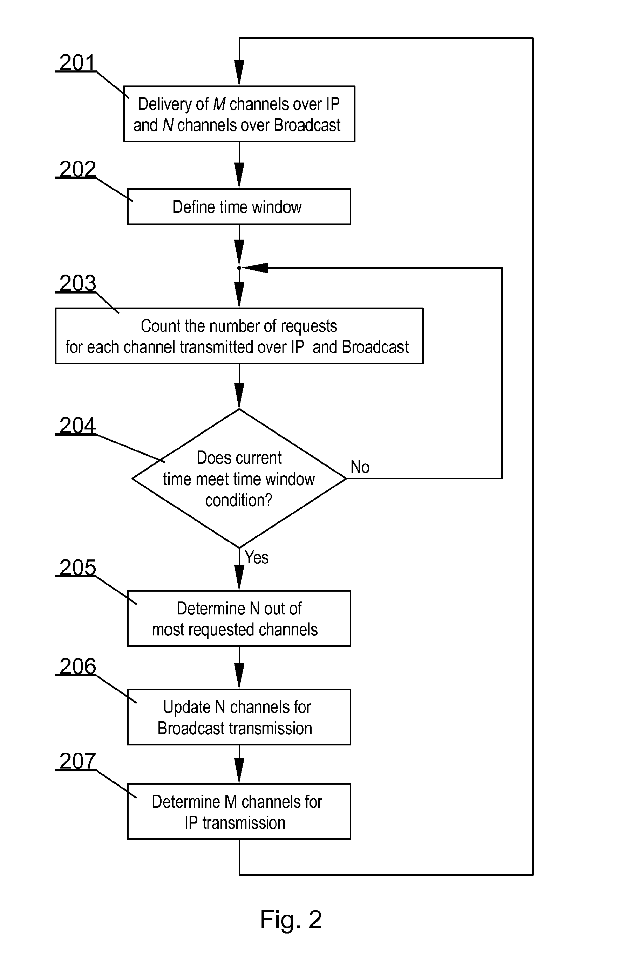

Fig. 2 presents a diagram of the method according to the present invention. The method starts at step 201 from delivering of M channels over IP and N channels over Broadcast. The head-end transmits data over the two aforementioned delivery channels while the subscriber's receivers receive data from the two aforementioned delivery channels.

Subsequently, at step 202, there may be defined a time window for monitoring iptv content requests. This approach is a first embodiment of monitoring iptv connections and broadcast playback requests. The requests are read and monitored by the decision module 118. Next, at step 203, there is executed counting of the number of requests for each channel transmitted over IP and Broadcast. For this purpose there may be defined a small database comprising a listing of channels and a listing of on demand content whereas each content item is associated with a ranking based on number of requests for playback in the defined time window.

In another embodiment, not shown in the drawing, a number of open iptv sessions to head-end content is taken into account. The sessions are open communication channels between the subscriber's receivers 151, 152 and the head-end 110. In this case the time-window approach is modified by not requiring the time constraint as the number of simultaneous sessions per content is taken into account.

In other words, a presence of a specific, numerical condition is monitored, be it sessions count or a number of accesses to a given content item within a time window.

In the approach shown in Fig. 2, when the current time meets the time window condition 204, at step 205 there is determined N out of most requested channels (content items). Subsequently, at step 206, there is executed an update of the M channels for Broadcast transmission i.e. the top N channels become M channels and are removed from access by the subscriber's receivers, via the iptv channel 140. Finally, since at step 206 there is a change in the N and M grouping, at step 207 there may be determined new M channels for IP transmission to subscribers' receivers 151, 152. The subscriber's terminals need to be notified that they are requested to switch reception of iptv content to broadcast content and their respective channels' lists may be updated accordingly.

Step 206 of the method according to the present invention may be executed with different rules so that from the subscribers point of view there is not any visible interruption of access to content caused by switching content delivery media i.e. iptv to broadcast and vice versa.

One approach is to transfer a content item or a channel from iptv to broadcast when the current program/event delivered via iptv has finished. Another approach may be to show an advertisements block to the iptv subscribers that play back certain selected iptv content. The advertisements block may be of different length at different subscribers terminals so that a group of subscribers terminals is brought to a certain point in the content and may resume its playback from the broadcast channel which is initiated during the advertisements block. In this manner a selection of subscribers may be transferred to the broadcast channel from the iptv channel. Most likely some subscribers will still receive the same content from the iptv channel due to the fact that not all subscribers playing back this particular content can be moved to the broadcast channel. In such an arrangement both iptv, and broadcast channel will deliver the same content to different subscribers groups but eventually when the program/event finishes all subscribers will be moved to the broadcast channel. In this manner the iptv bandwidth required for transmission from the head-end 110 will be decreased.

Additionally, it will be a typical approach to buffer, during switching from iptv to broadcast, some broadcast content before playback as the receivers of iptv content may be slightly out of synchronization with respect to other receivers. This is mainly the result of network latency.

Yet another approach will be to add a channel to broadcast at a high bandwidth so that subscriber terminals having mass storage may buffer, at least partially, the current program in short time (after the buffering period, the high bandwidth that has been allocated, may be reduced). Thereafter, each of the subscriber to the program on iptv channel may switch to a different location in the program for playback. In this approach the iptv channel will be freed much faster.

Optionally, the broadcast channel may comprise content with high quality for STBs while the iptv channel may offer the same content, in lower quality, for other devices such as tablets or smartphones.

The present invention is applicable in a television data delivery system and is aimed at bandwidth optimization. Therefore, the invention provides a useful, concrete and tangible result.

The aforementioned method for optimizing audio/video content delivery has been described in relation to a particular computing and data transmission system while including audio/video data processing. Thus, the machine or transformation test is fulfilled and that the idea is not abstract.

It can be easily recognized, by one skilled in the art, that the aforementioned method for audio/video content distribution may be performed and/or controlled by one or more computer programs. Such computer programs are typically executed by utilizing the computing resources in a computing device. Applications are stored on a non-transitory medium. An example of a non-transitory medium is a nonvolatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for audio/video content delivery comprising the steps of:
• transmitting N audio/video content channels over a broadcast medium (201);
• simultaneously transmitting M audio/video content items over a broadband medium (201);
the method being **characterized in that** it further comprises the steps of:
• defining a numerical condition for monitoring subscribers' requests for reception of the M audio/video content items (202);
• verifying (203, 204) whether the numerical condition is met for at least one of the M audio/video content items;
• in case the numerical condition is met, requesting ceasing of the transmission (205, 206, 207) of the at least one of the M audio/video content items via the broadband channel;
• requesting transmission (205, 206, 207) of the at least one of the M audio/video content items via the broadcast channel;
• notifying subscriber's receivers to switch from reception of the at least one of the M audio/video content items from the broadband channel to the broadcast channel.

2. The method according to claim 1 **characterized in that** the step of requesting transmission of the transmission of the at least one of the M audio/video content items via the broadcast channel includes removal of at least one other channel from the broadcast transmission.

3. The method according to claim 1 **characterized in that** the numerical condition, for monitoring subscribers' requests for reception of the M audio/video content items, is sessions count or a number of accesses to the content M audio/video items within a predefined time window.

4. The method according to claim 1 **characterized in that** the steps of:
• requesting ceasing of the transmission of the at least one of the M audio/video content items via the broadband channel;
• requesting transmission of the at least one of the M audio/video content items via the broadcast channel;
• are executed, independently for each content item, when the at least one of the M audio/video content items, delivered via the broadband channel, has finished.

5. The method according to claim 4 **characterized in that** the step of:
• requesting ceasing of the transmission of the at least one of the M audio/video content items via the broadband channel;
• is preceded by requesting the broadband transmission receivers to play back an advertisements block.

6. The method according to claim 4 **characterized in that** the step of requesting transmission of the at least one of the M audio/video content items via the broadcast channel is executed prior to requesting ceasing of the transmission of the at least one of the M audio/video content items via the broadband channel.

7. The method according to claim 2 **characterized in that** it further comprises a step of receiving from subscriber's receivers information regarding currently accessed broadcast channel and the channel having the fewest accesses is the one to be removed.

8. A computer program comprising program code means for performing all the steps of the computer-implemented method according to claim 1 when said program is run on a computer.

9. A computer readable medium storing computer-executable instructions performing all the steps of the computer-implemented method according to claim 1 when executed on a computer.

10. Method for audio/video content reception comprising the steps of:
• facilitating access to N audio/video content channels over a broadcast medium;
• simultaneously facilitating access to M audio/video content items over a broadband medium;
• playing back at least one of the M audio/video content items over a broadband medium;
the method being **characterized in that** it further comprises the steps of:
• receiving a request for ceasing of the reception of the at least one of the M audio/video content items via the broadband channel;
• receiving a request to start reception of the at least one of the M audio/video content items via the broadcast channel;
• playing back the at least one of the M audio/video content items over the broadcast channel.
